# EUROPEAN PATENT APPLICATION

(11) **EP 3 661 075 A1**
(43) Date of publication of application: **03.06.2020**
(21) Application number: 18208827.8
(22) Date of filing: 28.11.2018
(51) Int. Cl.: H04B 7/06

(54) **PHASED ARRAY SYSTEM, RADIO FREQUENCY INTEGRATED CIRCUIT AND CORRESPONDING METHOD**

(71) Applicant: Infineon Technologies AG, 85579 Neubiberg (DE)
(72) Inventor: TIEBOUT, Marc, 9584 Finkenstein (AT); CARUSO, Michele, 9584 Finkenstein (AT)
(74) Representative: Sticht, Andreas

(57) **Abstract**

Phased array systems, radio frequency integrated circuit and corresponding methods are provided. Radio frequency integrated circuits determine phase, delay or amplitude settings for radio frequency signals based on common information received from a controller and chip specific information.

## Description

### TECHNICAL FIELD

The present application relates to phased array systems, radio frequency (RF) integrated circuits, and to corresponding methods.

### BACKGROUND

Phased array transmit/receive systems are used for many applications such as mobile communications, in particular 5G (5^{th} generation) mobile communication, radar, space communication, weather research, optics, radio frequency (RF) identification systems and tactile feedback systems. Such phased array transmit/receive systems may also be used for gesture sensing, communication backhauling and high-speed routing in wireless gigabit (WiGig) or other consumer wireless systems.

A phased array system comprises an array of antennas in which relative phases, delays and/or amplitudes of a plurality of signals transmitted over the antennas or received via the antennas may be adjusted. This adjustment may be performed in various parts of the systems and devices, for example radio frequency, intermediate frequency (IF) or baseband (BB) parts, before or after analog-to-digital or digital-to-analog conversion etc. By proper adjustment of relative phases, delays and/or amplitudes, an effective radiation pattern of the array may be formed in a desired manner, which is also referred to as beam shaping or beamforming. This beam shaping of the radiation pattern occurs due to constructive and destructive interference between the signals transmitted or received by each antenna of the array of antennas. Through adjustable phase, delay and/or amplitude relationships, so-called beam steering may be performed, i.e. the radiation pattern may be modified also during transmission. Reception of signals may be done in a similar manner, thus providing a reception sensitive to a particular radiation pattern, for example to radiation from a particular direction.

Depending on a power required, the number of antennas in such an array may be high, for example several hundred antennas. Antennas are coupled to radio frequency integrated circuits (RFICs) which for example perform the above-mentioned phase adjustment, delay adjustment and/or amplitude adjustment, provide RF signals to the antennas and/or receive RF signals from the antennas. Each of these RFICs serves a limited number of antennas, for example four antennas or eight antennas, although the number may vary depending on implementation. Therefore, to build an array of several hundred antennas, a plurality of such RFICs are used. As an example, for typical millimeter wave applications, for example for 5G applications, 64 or 128 RFICs may be used.

In operation, these RFICs are controlled by a controller, for example implemented based on a field programmable gate array or application specific integrated circuit. This controller in conventional solutions updates phase settings, delay settings and/or amplitude settings in the respective RFICs for the antennas associated therewith. Depending on the application, fast updating of these settings may be required in particular for dynamic beam steering systems, for example programming times below 1 µs.

One conventional solution is to couple the controller to each RFIC via a respective dedicated serial interface connection, for example a serial peripheral interface (SPI). In this way, communication between the controller and the individual RFICs may be performed in parallel, thus reaching sufficient speed of programming the settings. However, on the downside, a large number of lines is needed in such a solution. For example, in an SPI based solution for each chip at least an individual data line is needed, leading to a high number of lines corresponding to the number of RFICs.

Other solutions include daisy chain configurations. To obtain sufficient speed via a daisy chain configuration, costly components operating at high clock frequency are needed. Furthermore, to obtain sufficient speeds usually not all radio frequency chips are grouped in a single daisy chain, but several daisy chains, for example 32 daisy chains each containing four radio frequency chips, are used, still resulting in a high number of lines needed. A high number of lines occupy corresponding space on a board and increase manufacturing costs.

### SUMMARY

A phased array system as defined in claim 1, a radio frequency integrated circuit as defined in claim 12 and a method as defined in claim 14 are provided. The dependent claims define further embodiments.

In an embodiment, a phased array system is provided, comprising:
a controller,
a plurality of radio frequency integrated circuits, each radio frequency integrated circuit being coupled with one or more associated antennas and configured to output radio frequency signals to the one or more associated antennas and/or to receive radio frequency signals from the one or more associated antennas,
wherein the controller is configured to transmit a same common information to all of the plurality of radio frequency integrated circuits,
wherein each of the radio frequency integrated circuits is configured to determine at least one of phase, delay and/or amplitude settings for the radio frequency signals based on the common information and chip specific information available to the respective radio frequency integrated circuit from an associated storage.

According to another embodiment, a radio frequency integrated circuit is provided, comprising:
a first interface to be coupled to a controller,
a second interface to be coupled to be coupled to one or more antennas, and
a logic circuit configured to
   receive common information via the first interface,
   retrieve stored chip specific information from an associated storage circuit,
   determine at least one of phase, delay or amplitude settings based on the common information and the stored chip specific information, and
a radio frequency circuit coupled to the second interface and configured to provide radio frequency signals to the one or more antennas (12; 21) or receive radio frequency signals from the one or more antennas (12; 13) using at least one of phase, delay or amplitude settings.

According to yet another embodiment, a method is provided, comprising:
transmitting a same common information to a plurality of radio frequency integrated circuits, each radio frequency integrated circuit being coupled with one or more associated antennas,
in each of the plurality of radio frequency integrated circuits, determining at least one of a phase, delay or amplitude setting for radio frequency signals provided to the one or more associated antennas by the respective radio frequency information or received from the associated antennas by the respective radio frequency integrated circuit based on the common information and chip specific information available to the respective radio frequency integrated circuit from an associated storage.

The above summary is merely intended to give a brief overview over some embodiments and is not to be construed as limiting in any way.

### BRIED DESCRIPTION OF THE DRAWINGS

Figs. 1A and 1B are schematic block diagrams for illustrating phased array systems.
Fig. 2 is a block diagram of a radio frequency integrated circuit according to an embodiment.
Fig. 3 is a block diagram of a system according to an embodiment.
Fig. 4 is a block diagram of a system according to a further embodiment.
Fig. 5 is a flowchart illustrating a method according to an embodiment.

### DETAILED DESCRIPTION

In the following, various embodiments will be described in detail referring to the attached drawings. It should be noted that these embodiments are given by way of example only and are not to be construed as limiting. For example, while embodiments may be described comprising numerous features or elements, in other embodiments some of these features or elements may be omitted, and/or may be replaced by alternative features or elements. Furthermore, apart from features or elements explicitly shown in the drawings or described herein, further features or elements, for example features or elements conventionally used in phased array systems, may be provided. In particular, some embodiments discussed herein focus on the communication between a controller and a plurality of radio frequency integrated circuits (RFICs) and the way the RFICs obtain phase, delay and/or amplitude settings for signals to be transmitted over or to be received over antennas associated therewith. Other components of such phased array systems may be implemented in any conventional manner available.

Features from different embodiments may be combined to form further embodiments unless noted otherwise. Variations or modifications described with respect to one of the embodiments may also be applicable to other embodiments.

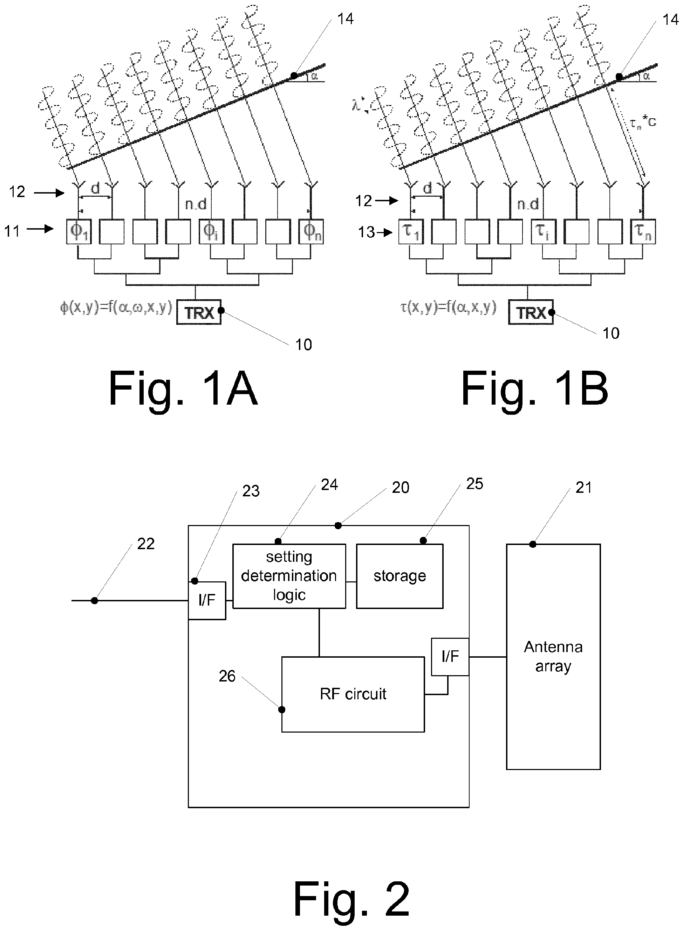

Turning now to the Figures, Figs. 1A and 1B are block diagrams to illustrate the operation of phased arrays and to explain some properties used in some embodiments. Both in Fig. 1A and Fig. 1B, a situation for transmitting radiation is shown. For the case of receiving radiation, a similar arrangement is used, with signal flow in the opposite direction (i.e. instead of providing signals to antennas, signals are received from antennas).

Both in Figs. 1A and 1B, a transceiver circuit 10 generates an RF signal to be transmitted via plurality of antennas 12. In the embodiment of Fig. 1A, at phase shifters 11 a phase shift φ₁...φᵢ...φₙ specific for each respective antenna 12 is applied. These phase shifts may be applied to the RF signals, but also may be applied to baseband signals or intermediate frequency signals before converting them to RF signals in other embodiments. In Fig. 1B, instead of phase shifts φ₁-φₙ, antenna specific delays τ₁- τₙ are applied via respective delay elements 13. In the two-dimensional case shown in Figs. 1A and 1B, by selecting the phase shifts φ₁...-φₙ of Fig. 1A or the delays τ₁- τₙ of Fig. 1B accordingly, a radiation direction which may be characterized by an angle α between a wavefront 14 (i.e. a line perpendicular to the emission direction) and a horizontal line in Figs. 1A and 1B may be obtained. In a two-dimensional array of antennas, the direction of radiation, also referred to as beamforming direction in the following, may be characterized by an elevation angle and an azimuth angle.

In the schematic diagrams of Figs. 1A and 1B, the antennas are spaced apart by a distance d, such that the complete array extends over a length n·d, n being the number of antennas in a row. For a two-dimensional array, the position of each antenna may be characterized by coordinates x, y.

In case of Fig. 1A, the phase shift φ(x,y) for an antenna at a position x, y is a function of the angle α (or of azimuth and elevation in the two-dimensional case), a frequency ω of the transmitted signal, and of x and y. In case of Fig. 1B, the phase shift τ(x,y) for an antenna at position x,y is a function of the angle α (or of azimuth and elevation), and of x, y.

As already mentioned in the introductory portion, typical phase arrays comprise a plurality of radio frequency integrated circuits (RFICs), which each are associated with one or more antennas, for example four antennas or eight antennas. An RFIC as used herein is an integrated circuit which at least in parts thereof processes radio frequency signals, in particular for providing radio frequency signals to one or more antennas or for receiving radio frequency signals from one or more antennas. Such RFICs may for example comprise phase shifters 11 or delay circuits 13 and/or other baseband circuitry, intermediate frequency circuitry or radio frequency circuitry conventionally used in RFICs of phased arrays.

Furthermore, in addition to the phase adjustment of Fig. 1A and the delay adjustment of Fig. 1B, also relative amplitudes of the signals transmitted by various antennas may be adjusted, for example by adjusting variable gain amplifiers (VGAs) associated with the antennas. For example, the amplitudes may be adjusted according to a certain envelope function over all antennas, for example to reduce side lobes. In such an approach, for example antennas near or at the edges of an array of antennas transmit with less amplitude than other antennas. In this case, the amplitude also is a function of x and y.

In embodiments which will be discussed in the following in more detail, a controller transmits common information to all RFICs. This common information may for example be an indication of beamforming direction, and may for example be expressed as azimuth and elevation. Other possibilities will be discussed below as well. The RFIC then retrieves chip-specific information from an internal or external associated storage and determines the phase, delay or amplitude settings for each antenna. For example, for the phase calculation shown in Fig. 1A, the angle α and frequency ω may be transmitted as common information, while the x and y coordinates for each antenna may be retrieved for an associated storage, and then the phase shifts may be calculated based on the angle α received as common information, the frequency ω and x, y. Similar considerations apply to the case of Fig. 1B.

In such embodiments, in some implementations only the common information needs to be transmitted from the controller, and no chip specific information may need to be transmitted during operation of the phased array. For transmitting the common information, a comparatively simple common bus may be used, thus reducing the number of lines necessary. This in some embodiments may reduce implementation costs.

Next, with reference to Fig. 2, a radio frequency integrated circuit according to an embodiment will be discussed in some detail, which may be used to implement techniques as already mentioned above.

Fig. 2 illustrates a radio frequency integrated circuit (RFIC) 20. RFIC 20 comprises a first interface 23, via which RFIC 20 may be coupled to a controller via a bus 22. Via bus 22, in operation RFIC 20 receives common information from a controller. In some embodiments, this common information may be indicative of a beamforming direction, for example given as elevation and azimuth angles. In other embodiments, the common information may comprise a storage address. In addition thereto, in some embodiments bus 22 may also be used to transmit further types of common information, for example a common command to set RFIC 20 either to a transmit mode or a receive mode. Further settings common to all RFIC may also be communicated using common information. For example, transmitters or receivers may be disabled, or power back-off information may be sent.

In some embodiments, the common information may also allow to select between phase settings as shown in Fig. 1A and delay settings as shown in Fig. 1B, such that the RFICs may be operated in a "phase mode" or in a "delay mode". In particular in case of phase mode frequency information, i.e. a frequency to be used for transmitting and/or receiving, may also be transmitted as common information in embodiments where transmit and/or receive frequency is variable.

Furthermore, the common information may comprise common amplitude information or other information indicative of a signal strength to be transmitted. Common information, as used herein, is information which is the same for all RFICs, whereas chip specific information differs from RFIC to RFIC.

The common information is provided to a setting determination logic 24. Setting determination logic 24 based on the common information received via bus 22 and chip specific information retrieved from a storage 25 determines phase settings (for example φ₁-φₙ of Fig. 1A), delay settings (for example τ₁-τₙ of Fig. 1B) and/or amplitude settings (for example by modulating a received amplitude setting with an amplitude envelope stored in storage 25) for one or more antennas of an antenna array 21 coupled to RFIC 20 via a second interface 21. Setting determination logic 24 may be implemented for example using a programmable microcontroller circuit, or an application-specific logic circuit, for example based on a field programmable gate array or any other suitable circuit.

Storage 25 may be any kind of storage, for example a flash memory storage, an SRAM storage, an EPROM storage, a storage based on e-fuses or the like. As seen from the above example, storage 25 may be rewritable, or may be a fixed storage which may be programmed once for example upon initialization of a phased array system.

While storage 25 is shown as a part of RFIC 20 in Fig. 2, i.e. shown as integrated with RFIC 20, in other embodiments storage 25 may also be provided as an external storage associated with RFIC 20.

In case the common information comprises beamforming direction information like azimuth and elevation angles, the chip specific information stored in storage 25 may for example comprise positions of antennas of antenna array 21 coupled to RFIC 20. For example, in such a case the direction information may comprise one word (16 bits) indicating the azimuth angle and one word indicating the elevation angle. For such an embodiment, for example 32 bits of data communication are required. The position information may be given in various ways. For example, x and y coordinates of the antennas may be given, or the antenna pitch (distance between antennas) may be given together with a size of the array and x, y coordinates of an origin of the array. In embodiments where the antennas have a fixed spatial relationship with RFIC 20, also the coordinates of RFIC 20 may be given, and the position of the antennas may then be derived therefrom. Generally, the position information may take any form which allows to determine the position of the antennas.

Setting determination logic 24 then calculates the phase or delay settings based on the direction information and the position information, for example as explained with reference to Figs. 1A and 1B. The calculation itself may be performed in any conventional manner and is essentially based on the calculation of interference between signals transmitted by or received by the antennas.

In other embodiments, the common information may comprise a storage address. In such embodiments, phase settings, delay settings and/or amplitude settings for a plurality of beamforming directions may be pre-calculated and stored in storage 25. The common information received via bus 22 then indicates from which storage address the settings should be retrieved and applied. In such embodiments, in a system described later the settings for a particular beamforming direction are stored in the same storage address in all RFICs of the system, such that a controller only needs to send a corresponding storage address as common information to all RFICs.

In yet other embodiments, the common information may comprise two storage addresses and an interpolation factor, and setting determination logic 24 then interpolates between phase settings, delay settings and/or amplitude settings of the two storage addresses based on the interpolation factor.

The settings thus determined (phase settings, delay settings and/or amplitude settings) are then applied to an RF circuit 26. The term RF circuit as used herein relates to a circuit which is adapted to generate RF signals to be output to antenna array 21 and/or to receive RF signals from antenna array 21. RF circuit 26 besides RF circuitry may also comprise intermediate frequency (IF) or baseband circuitry and may be implemented in any conventional manner.

It should be noted that providing actual information to be transmitted (i.e. data) to RF circuit 26 or forwarding received and processed signals to other entities may be performed via bus 22 or via separate lines in any conventional manner.

In some embodiments, the chip specific information stored in storage 25 may comprise calibration information, for example temperature calibration information. In such embodiments, the calibration information may additionally be used for determining phase, delay or amplitude settings. For example, RFIC 20 in addition may comprise a temperature sensor or may receive temperature information as common information and apply temperature calibration information to correct temperature variations.

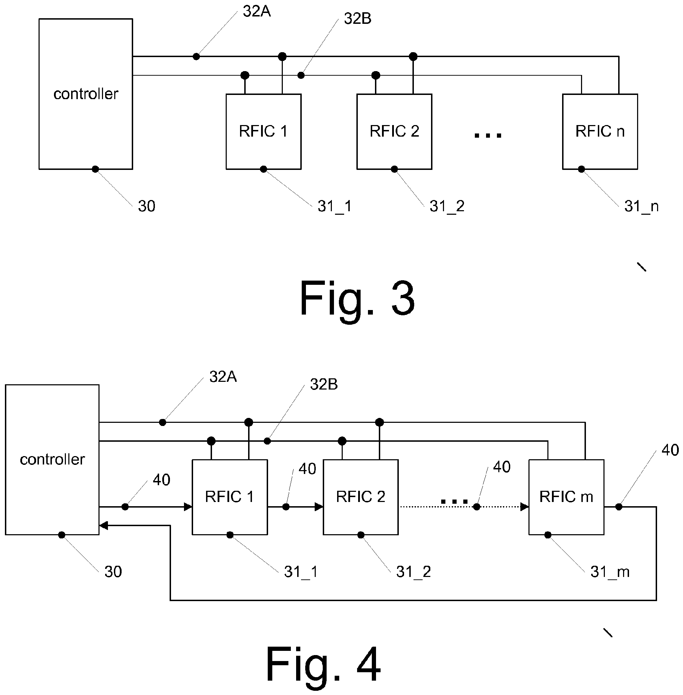

Fig. 3 illustrates a system according to an embodiment. In order to avoid repetitions, the phased array system of Fig. 3 will be described referring to the previous explanations for Figs. 1A, 1B and 2.

The phased array system of Fig. 3 comprises a controller 30 and a plurality of RFICs 31_1, 31_2, ..., 31_m, collectively referred to as RFICs 31. Each RFIC may be implemented as shown for RFIC 20 in Fig. 2 and has one or more antennas associated therewith, as also explained with reference to Fig. 2.

Controller 30 is coupled to RFICs 31 via a bus. In Fig. 3, as an example a two-line bus 32A, 32B is shown. The bus may be implemented based on any conventional bus standard, for example as an I2C bus, SPI bus, SCI bus, MIPI bus, CAN bus or any other suitable parallel or serial bus, and may also comprise more lines than explicitly shown. Bus 32A, 32B in a particular implementation may for example be an SPI bus clocked at about 50 MHz, but is not limited thereto. Via bus 32A, 32B, controller 30 broadcasts the common information explained already with respect to Fig. 2, for example beamforming direction information or address information, to all RFICs 31. RFICs 31 then determine the respective phase, amplitude or delay settings based on this common information and chip specific stored information, as also explained referring to Fig. 2. As only common information needs to be transmitted, a two-line bus as shown in Fig. 3 is sufficient. It should be noted that nevertheless more lines may be provided, for example select lines for selecting individual RFICs, or read/write lines for determining a direction of communication, depending on a particular bus implementation. In embodiments, controller 30 is bus master and may communicate to all RFICs which act as bus slaves, but RFICs 31 may not directly communicate between each other. In other embodiments, such a direct communication between RFICs may also be possible, depending on a bus implementation. While a serial bus scheme is shown in Fig. 3, in other embodiments parallel buses having a plurality of transmit or receive lines may be used.

A minimum of lines required therefor may be two or three, depending on a bus system used, compared to over 100 lines for conventional solutions. Also, as in embodiments as discussed with reference to Figs. 2 and 3 comparatively little data, for example 32 bit or 20 bit, needs to be transmitted, the programming of the RFICs for a particular beamforming direction may be fast, for example significantly smaller than 1 µs for clock speeds smaller than 100 MHz.

It should be noted that besides broadcasting common information, each RFIC 31 may also have an individual address by which it may be addressed by controller 30. In such embodiment, one address indicates broadcasting, which is used to transmit the above-mentioned common information, while chip specific addresses are used to transmit chip specific information. Such individual addresses may be for example used for startup configuration, calibration or testing purposes like built-in test equipment (BITE) or built-in self-test (BIST). Therefore, a control command set for bus 32A, 32B may comprise broadcast commands which transmit common information to all RFICs as well as chip specific commands which address individual chips.

In such a startup phase, in particular the storage where the chip specific information is stored (for example storage 25 of Fig. 2) may be filled.

In case of using addresses, the number of bits depends on an address space used. For example, a 20 bit address space may be used.

Filling storage 25 in some implementations may occur when manufacturing the phased array system, and in other embodiments may be performed when booting the system.

Generally, when manufacturing a phased array system, the antennas are coupled to respective RFICs which are coupled to a controller like controller 30. For example, the RFICs together with the controller may be placed on a printed circuit board (PCB) and coupled to the controller via a bus also provided on the PCB. Antennas forming an antenna array may be provided also on the PCB or separately therefrom and connected to the respective associated RFIC. At this point, the positions of the antennas in the array coupled to each RFIC are fixed and may be programmed into storage 25. This programming may for example be performed by controller 30 using the above-mentioned chip specific addresses.

For such a scheme, the addresses of the individual RFICs need to be determined. Several possibilities may be used for this in various embodiments.

One possibility is to provide the RFICs with individual chip IDs when manufacturing. For example, RFICs may be provided with a unique identifier (for example 48bit) using e-fuses.

This chip ID may then be used for addressing the chips.

In this approach, it has to be determined which RFIC with which chip ID is coupled to which antennas in the antenna array. In this respect, it should be noted that by the design of the printed circuit board, it is known which RFIC position is coupled to which antennas, such that only the RFIC address for the respective position needs to be determined. One possibility is to provide the chip ID with each chip and provide to the controller which chip is coupled to which antenna by noting the chip IDs when for example soldering the RFICs to a printed circuit board. Another possibility is brute force searching, i.e. trying the 48 bit addresses one after the other and waiting on a response. Depending on the number of RFICs, the address space for the ID, however, such a process may take a comparatively long time.

A further possibility to provide addresses is to provide such addresses by hard coded wiring or soldering of pull-up or pull-down resistors on the printed circuit board for each RFIC. For such an approach, the RFIC needs corresponding additional balls/pins to be connected to such hard-coded wiring or pull-up/pull-down resistors. In other words, in such an approach each RFIC is assigned an address by hardware coded on the printed circuit board.

A further possibility is to use an additional daisy chain bus for address initialization. Such a system is shown in Fig. 4. The system of Fig. 4 is based on the system of Fig. 3, and like elements bear the same reference numerals and will not be described repeatedly. As in Fig. 3, the embodiment of Fig. 4 comprises bus 32A, 32B, which may for example be an SPI bus as mentioned.

In addition, Fig. 4 comprises a second bus 40 in a daisy chain configuration. Second bus 40 may be an additional SPI bus, and may share some lines like a clock line and a CSN (chip select) line (not shown in Fig. 4) with bus 32A, 32B. Bus 40 may run at a lower clock frequency than bus 32A, 32B, for example at approximately 1 MHz or below. Via daisy chain bus 40, the addresses of RFICs 31 may be determined. For example, if already programmed internal addresses of RFICs 31 are used, controller 30 sends a first address request, which is replied to by RFIC 31 1 with its address. Then, controller 30 transmits a next address request via daisy chain bus 40. As RFIC 31_1 has already responded to such a request, it now forwards the request to the next RFIC, 31_2, which then responds with its address. This is continued until all RFICs have provided their respective address to controller 30. Then, the storage of RFICs 31 may be individually filled using bus 32A, 32B and the individual addresses. In other embodiments, instead of using already preprogrammed addresses, the addresses may be provided by controller 30 in a similar manner. In this case, controller 30 transmits a first address via bus 40, which is adopted by RFIC 31_1. Then, a next address is sent via bus 40. As RFIC 31_1 has already adopted an address, it forwards the address to the next RFIC 31_2 which then adopts this address etc., until all RFICs are provided with an address.

The approach of Fig. 4 requires an additional bus, but allows for greater flexibility as the addresses may be programmable.

It should be noted that in some embodiments, the addresses determined or provided may be then stored in a non-volatile memory like a flash memory in controller 30 and/or RFICs 31, such that the addressing procedure may need be performed only once and not at every startup. Likewise, data written to the storage associated with each RFIC (like storage 25 of Fig. 2) may be stored in a non-volatile memory so that the programming does not need to be performed at every booting. In other embodiments, volatile memories may be used, and the storage may be programmed at each booting.

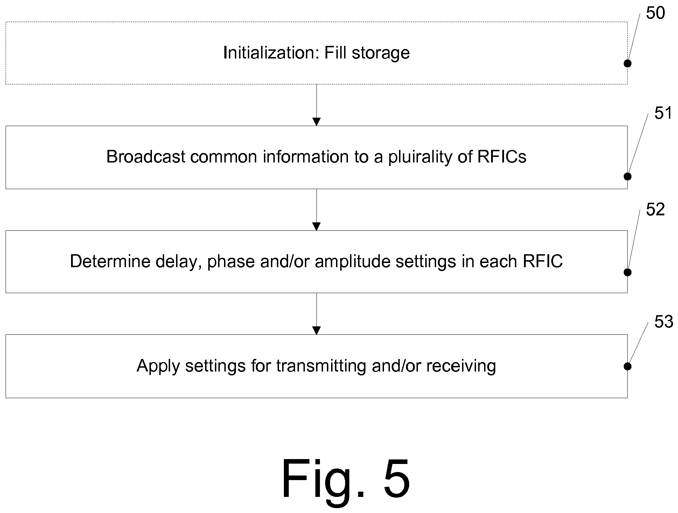

Fig. 5 is a flowchart illustrating a method according to some embodiments, using the techniques as discussed above. To avoid repetitions, the method of Fig. 5 will be explained by referring to the embodiments of Figs. 1-4 described above. However, the method of Fig. 5 may also be implemented in other devices and systems than the ones shown in Figs. 1-4 above.

At 50 in Fig. 5, an initialization is performed, where storages associated with RFICs are filled (for example storage 25 of Fig. 2). This initialization, as explained above, may be performed once at the manufacturer or may be performed repeatedly, for example when booting a phased array system.

For example, as already explained, positions of antennas associated with the respective RFICs, for example as x/y coordinates, may be written into the storage, or phase, delay and/or amplitude information may be written into the storage for a plurality of different beamforming directions.

At 51, common information is broadcasted to a plurality of RFICs, for example from controller 30 to RFICs 31 of Fig. 3. The common information may comprise beamforming direction information or may comprise a storage address associated with a particular beamforming direction.

At 52, the method comprises determining delay, phase and/or amplitude settings in each RFIC based on the common information and chip specific information stored in the storage, as explained above. At 53, the method comprises applying the settings determined at 52 for transmitting and/or receiving radio frequency waves via a plurality of antennas.

Example embodiments are summarized here. Other embodiments can also be understood from the entirety of the specification and the claims filed herein.

Example 1. A phased array system, comprising:
a controller,
a plurality of radio frequency integrated circuits, each radio frequency integrated circuit being coupled with one or more associated antennas and configured to output radio frequency signals to the one or more associated antennas and/or to receive radio frequency signals from the one or more associated antennas,
wherein the controller is configured to transmit a same common information to the plurality of radio frequency integrated circuits,
wherein each of the radio frequency integrated circuits is configured to determine at least one of phase, delay or amplitude settings for the radio frequency signals based on the common information and chip specific information available to the respective radio frequency integrated circuit from an associated storage.

Example 2. The system of example 1, wherein the associated storage is included in the radio frequency integrated circuits.

Example 3. The system of example 1 or 2, wherein the associated storage comprises a static random access memory or an e-fuse.

Example 4. The system of any one of examples 1 to 3, wherein the common information comprises beamforming direction information, and wherein the chip specific information comprises position information of antennas associated with the respective radio frequency integrated circuit, wherein each of the radio frequency integrated circuits is configured to calculate the at least one of the phase, delay or amplitude settings based on the position information and the beamforming direction information.

Example 5. The system of any one of examples 1 to 3, wherein the common information includes address information, and wherein the chip specific information includes a plurality of stored phase, delay or amplitude settings, wherein each radio frequency integrated circuit is configured to retrieve at least one of the phase, delay or amplitude settings based on the address information from the associated storage.

Example 6. The system of any one of examples 1-5, wherein the common information selects between using phase settings and using delay settings.

Example 7. The system of any one of examples 1-6, wherein the common information comprises frequency information indicating a frequency to be used for transmitting and/or receiving by the radio frequency integrated circuits.

Example 8. The system of any one of examples 1-7, wherein the chip specific information comprises chip specific calibration information.

Example 9. The system of any one of examples 1-8, further comprising a bus coupling the controller to each of the radio frequency integrated circuits, wherein the controller is configured to broadcast the common information via the bus.

Example 10. The system of example 9, wherein the bus comprises a serial bus.

Example 11. The phased array system of any one of examples 1-10, wherein the controller is configured to provide the chip specific information to the radio frequency integrated circuits during an initialization phase.

Example 12. The system of example 11, wherein the controller is provided to provide the chip specific information using individual addressing of the radio frequency integrated circuits via the bus.

Example 13. The system of any one of examples 8-11, wherein the system comprises an additional bus coupling the radio frequency integrated circuits in a daisy chain configuration, wherein the controller is configured to determine addresses of the radio frequency integrated circuits using the additional bus.

Example 14. A radio frequency integrated circuit, comprising:
a first interface to be coupled to a controller,
a second interface to be coupled to one or more antennas, and
a logic circuit configured to:
   receive common information via the first interface, retrieve stored chip specific information from an associated storage, and
   determine at least one of a phase, delay or amplitude settings based on the common information and chip specific information,
a radio frequency circuit coupled to the second interface and configured to provide radio frequency signals to the one or more antennas or receive radio frequency signals from the one or more antennas using at least one of phase, delay or amplitude settings.

Example 15. The radio frequency integrated circuit of example 14, further comprising the associated storage.

Example 16. The radio frequency integrated circuit of example 14 or 15, wherein the common information comprises beamforming direction information, and wherein the chip specific information comprises position information of antennas associated with the respective radio frequency integrated circuit, wherein the logic circuit is configured to calculate the at least one of the phase, delay or amplitude settings based on the position information and the beamforming direction information.

Example 17. The radio frequency integrated circuit of example 14 or 15, wherein the common information includes address information, and wherein the chip specific information includes a plurality of stored phase, delay or amplitude settings, wherein the logic circuit is configured to retrieve the phase, delay or amplitude setting based on the address information from the associated storage. Example 18. The radio frequency integrated circuit of any one of examples 14-17, wherein the chip specific information comprises chip specific calibration information.

Example 19. The radio frequency circuit of any one of examples 14-18, wherein the first interface is a serial bus interface.

Example 20. The radio frequency circuit of any one of examples 14-19, wherein the common information comprises frequency information indicating a frequency to be used for transmitting and/or receiving by the radio frequency integrated circuit.

Example 21. A method, comprising:
transmitting a same common information to a plurality of radio frequency integrated circuits, each radio frequency integrated circuit being coupled with one or more associated antennas,
in each of the radio frequency integrated circuits, determining at least one of a phase, delay or amplitude setting for radio frequency signals provided to the associated antennas by the respective radio frequency integrated circuit or received from the associated antennas by the radio frequency integrated circuit based on the common information and on chip specific information available to the respective radio frequency integrated circuit from an associated storage.

Example 22. The method of example 21, wherein the common information comprises beamforming direction information, and wherein the chip specific information comprises position information of antennas associated with the respective radio frequency integrated circuit, wherein the method further comprises:
calculating, in each radio frequency integrated circuit, the at least one of the phase, delay or amplitude settings based on the position information and the beamforming direction information.

Example 23. The method of example 21, wherein the common information includes address information, and wherein the chip specific information includes a plurality of stored phase, delay or amplitude settings, wherein the method further comprises:
retrieving, in each radio frequency integrated circuit, the phase, delay or amplitude setting based on the address information.

Example 24. The method of any one of examples 21-23, further comprising selecting between using phase settings and using delay settings based on the common information.

Example 25. The method of any one of examples 21-24, wherein the chip specific information comprises chip specific calibration information.

Example 26. The method of any one of examples 21-24, further comprising providing the chip specific information to the radio frequency integrated circuits during an initialization phase.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A phased array system, comprising:
a controller (30),
a plurality of radio frequency integrated circuits (20; 31), each radio frequency integrated circuit being coupled with one or more associated antennas (12; 21) and configured to output radio frequency signals to the one or more associated antennas (12; 21) and/or to receive radio frequency signals from the one or more associated antennas (12; 21),
wherein the controller (30) is configured to transmit a same common information to the plurality of radio frequency integrated circuits (20; 31),
wherein each of the radio frequency integrated circuits is configured to determine at least one of phase, delay or amplitude settings for the radio frequency signals based on the common information and chip specific information available to the respective radio frequency integrated circuit (20; 31) from an associated storage.

2. The system of claim 1, wherein the associated storage (25) is included in the radio frequency integrated circuits (20; 31).

3. The system of claim 1 or 2, wherein the common information comprises beamforming direction information, and wherein the chip specific information comprises position information of antennas associated with the respective radio frequency integrated circuit (20; 31), wherein each of the radio frequency integrated circuits is configured to calculate the at least one of the phase, delay or amplitude settings based on the position information and the beamforming direction information.

4. The system of claim 1 or 2, wherein the common information includes address information, and wherein the chip specific information includes a plurality of stored phase, delay or amplitude settings, wherein each radio frequency integrated circuit is configured to retrieve at least one of the phase, delay or amplitude settings based on the address information from the associated storage.

5. The system of any one of claims 1-4, wherein the common information selects between using phase settings and using delay settings.

6. The system of any one of claims 1-5, wherein the common information comprises frequency information indicating a frequency to be used for transmitting and/or receiving by the radio frequency integrated circuits (20; 31).

7. The system of any one of claims 1-6, wherein the chip specific information comprises chip specific calibration information.

8. The system of any one of claims 1-7, further comprising a bus coupling the controller (30) to each of the radio frequency integrated circuits (20; 31), wherein the controller is configured to broadcast the common information via the bus.

9. The phased array system of any one of claims 1-8, wherein the controller is configured to provide the chip specific information to the radio frequency integrated circuits during an initialization phase.

10. The system of claim 8 and claim 9, wherein the controller is provided to provide the chip specific information using individual addressing of the radio frequency integrated circuits via the bus.

11. The system of any one of claims 8-10, wherein the system comprises an additional bus (40) coupling the radio frequency integrated circuits in a daisy chain configuration, wherein the controller (30) is configured to determine addresses of the radio frequency integrated circuits (20; 31) using the additional bus (40).

12. A radio frequency integrated circuit (20; 31), comprising:
a first interface (23) to be coupled to a controller,
a second interface (27) to be coupled to one or more antennas (12; 21), and
a logic circuit (24) configured to:
receive common information via the first interface,
retrieve stored chip specific information from an associated storage (25), and
determine at least one of a phase, delay or amplitude settings based on the common information and chip specific information,
a radio frequency circuit (26) coupled to the second interface (27) and configured to provide radio frequency signals to the one or more antennas (12; 21) or receive radio frequency signals from the one or more antennas (12; 13) using at least one of phase, delay or amplitude settings.

13. The radio frequency integrated circuit of claim 12,
wherein the common information comprises beamforming direction information, and wherein the chip specific information comprises position information of antennas associated with the respective radio frequency integrated circuit, wherein the logic circuit (24) is configured to calculate the at least one of the phase, delay or amplitude settings based on the position information and the beamforming direction information, or
wherein the common information includes address information, and wherein the chip specific information includes a plurality of stored phase, delay or amplitude settings, wherein the logic circuit (24) is configured to retrieve the phase, delay or amplitude setting based on the address information from the associated storage.

14. A method, comprising:
transmitting a same common information to a plurality of radio frequency integrated circuits, each radio frequency integrated circuit being coupled with one or more associated antennas,
in each of the radio frequency integrated circuits, determining at least one of a phase, delay or amplitude setting for radio frequency signals provided to the associated antennas by the respective radio frequency integrated circuit or received from the associated antennas by the radio frequency integrated circuit based on the common information and on chip specific information available to the respective radio frequency integrated circuit from an associated storage.

15. The method of claim 14,
wherein the common information comprises beamforming direction information, and wherein the chip specific information comprises position information of antennas associated with the respective radio frequency integrated circuit, wherein the method further comprises:
calculating, in each radio frequency integrated circuit, the at least one of the phase, delay or amplitude settings based on the position information and the beamforming direction information, or
wherein the common information includes address information, and wherein the chip specific information includes a plurality of stored phase, delay or amplitude settings, wherein the method further comprises:
retrieving, in each radio frequency integrated circuit, the phase, delay or amplitude setting based on the address information.
